**Europäisches Patentamt**

**European Patent Office**

**Office européen des brevets**

(11) Numéro de publication : **0 369 900 B1**

(12) **FASCICULE DE BREVET EUROPEEN**

(45) Date de publication du fascicule du brevet :
**03.06.92 Bulletin 92/23**

(51) Int. Cl.⁵ : **F16H 3/66**

(21) Numéro de dépôt : **89420430.4**

(22) Date de dépôt : **07.11.89**

(54) **Boîte de vitesses à deux rapports et à changement de vitesse à l'arrêt.**

(30) Priorité : **18.11.88 FR 8815487**

(43) Date de publication de la demande :
**23.05.90 Bulletin 90/21**

(45) Mention de la délivrance du brevet :
**03.06.92 Bulletin 92/23**

(84) Etats contractants désignés :
**AT BE CH DE ES GB GR IT LI LU NL SE**

(56) Documents cités :
**DE-A- 3 324 434**
**FR-A- 2 614 961**
**GB-A- 2 145 172**
**GB-A- 2 197 700**
**US-A- 4 296 650**

(73) Titulaire : **POTAIN**
**18 rue de Charbonnières**
**F-69130 Ecully (FR)**

(72) Inventeur : **Dessaux, Claude**
**Baudemont**
**F-71800 La Clayette (FR)**

(74) Mandataire : **Bratel, Gérard et al**
**Cabinet GERMAIN & MAUREAU B.P. 3011**
**F-69392 Lyon Cédex 03 (FR)**

Jouve, 18, rue Saint-Denis, 75001 PARIS

## Description

La présente invention est relative à une boîte de vitesses à deux rapports et à changement de vitesse à l'arrêt, destinée par exemple à être intercalée entre le moteur électrique et le réducteur d'entraînement du tambour dans un mécanisme de treuil de levage, pour assurer le doublement de la gamme des vitesses et les fonctions de frein de service et de frein de sécurité. Cette invention concerne plus particulièrement, dans une boîte de vitesses d'un type généralement connu, un dispositif de freinage permettant d'effectuer en toute sécurité le changement de vitesse à l'arrêt et elle trouve son application dans le domaine des appareils de levage et de manutention pour lesquels, à aucun moment, la chaîne cinématique ne doit être interrompue pour éviter le dévirage de la charge suspendue.

On connaît différents types de boîtes de vitesses permettant d'obtenir le changement de vitesse à l'arrêt sans interrompre la chaîne cinématique.

Selon un premier type connu, comme décrit par exemple dans le brevet français FR-A-1 440 066, la continuité de la liaison cinématique entre l'arbre récepteur et l'arbre moteur est obtenue en utilisant deux moteurs accouplés respectivement aux deux planétaires d'un différentiel dont le porte-satellites est solidaire de l'arbre de sortie. Dans ce cas, on utilise deux moteurs électriques équipés chacun d'un électro-frein et d'un inverseur de sens de rotation ; selon la vitesse choisie, les puissances des deux moteurs sont simultanément utilisées, ou seule la puissance d'un moteur est utilisée.

Selon un deuxième type connu, comme décrit par exemple dans le brevet français FR-A-2 188 740, la boîte de vitesses comporte un arbre d'entrée accouplé à des moyens moteurs, un arbre intermédiaire, un différentiel intercalé entre l'arbre d'entrée et l'arbre intermédiaire, et un arbre de sortie. La cage du différentiel est reliée à des moyens de commande aptes, dans une première position, à la lier en rotation au porte-satellites pour obtenir une grande vitesse sur l'arbre intermédiaire et, dans une deuxième position, à la lier en rotation à une pièce fixe pour obtenir une vitesse moins élevée sur l'arbre intermédiaire qui comporte des moyens de blocage en rotation fonctionnant pendant le passage d'une position à l'autre des moyens de commande. De cette manière, on réalise un changement de vitesse par crabotage qui nécessite des moyens de commande complexes et coûteux.

Selon un autre type connu, comme par exemple dans la demande de brevet français publiée FR-A-2 556 806, le changement de vitesse s'effectue uniquement par l'action de freins. Le mécanisme de transmission à deux vitesses décrit est classique ; il est constitué d'un carter renfermant un ensemble de trains épicycloïdaux, ainsi que d'autres éléments de transmission tels que deux arbres creux, coaxiaux à l'arbre d'entrée et en liaison avec les trains épicycloïdaux, sur lesquels sont montés les freins. Dans cette réalisation, par ailleurs décrite succintement, les éléments assurant la fonction de freinage sont propres uniquement à cette fonction et sont disposés à l'extérieur du carter, ce qui multiplie le nombre de pièces et augmente l'encombrement d'ensemble du mécanisme.

La présente invention remédie à ces inconvénients, en fournissant une boîte de vitesses à deux rapports dont le changement de vitesse s'effectue à l'arrêt au moyen de freins disposés dans le carter proprement dit de la boîte sans en augmenter son encombrement, et qui offre en outre une sécurité améliorée.

A cet effet, la boîte de vitesses selon l'invention, à deux rapports et à changement de vitesse à l'arrêt, comprend de façon connue par exemple le GB-A-2 197 700, un ensemble de deux trains épicycloïdaux, de rapports différents, constitué d'un planétaire double solidaire de l'arbre d'entrée, d'un porte-satellites double solidaire de l'arbre de sortie, et de deux couronnes à denture intérieure engrenant chacune avec des pignons satellites du porte-satellites double, cet ensemble étant disposé à l'intérieur d'un carter en forme de corps creux fermé par un flasque latéral traversé par l'arbre d'entrée de la boîte et par un autre flasque latéral traversé par l'arbre de sortie de la boîte, chacune des couronnes de l'ensemble des deux trains épicycloïdaux étant montée libre en rotation dans le corps du carter autour de l'axe général de la boîte; cette boîte de vitesses est caractérisée en ce que chacune des deux couronnes de l'ensemble des deux trains épicycloïdaux est constituée de plusieurs couronnes élémentaires coaxiales montées mobiles axialement et séparées les unes des autres par des disques de friction coaxiaux à cannelures extérieures coopérant avec des cannelures conjuguées du corps du carter et montés également mobiles axialement à l'intérieur du corps du carter, et en ce que des moyens de commande portés par le corps du carter sont prévus pour freiner et solidariser indépendamment l'une et l'autre couronne avec le carter, en serrant les couronnes élémentaires contre les disques de friction adjacents, ou pour libérer l'une ou l'autre des couronnes en desserrant les disques et couronnes élémentaires correspondants, ces moyens de commande comprenant des moyens mécaniques élastiques disposés entre les deux couronnes de l'ensemble des deux trains épicycloïdaux pour maintenir en pression les faces en regard des couronnes élémentaires et des disques de friction entre les flasques latéraux du carter et les faces opposées desdits moyens mécaniques élastiques, ces moyens permettant de solidariser, au repos les arbres d'entrée et de sortie.

Avantageusement, les moyens mécaniques élastiques consistent en des rondelles-ressorts disposées et comprimées entre deux pistons annulaires mobiles axialement dont les surfaces latérales extérieures forment chacune une couronne d'appui répartissant la force des rondelles-ressorts sur les deux ensembles de couronnes élémentaires et de disques de friction.

Selon une autre caractéristique, les deux pistons annulaires sont montés chacun mobile axialement dans un cylindre annulaire formé à l'intérieur du corps du carter, en formant ensemble deux chambres de pression annulaires indépendantes communiquant chacune avec une source de pression de commande hydraulique ou pneumatique par l'intermédiaire de canaux ménagés dans le carter ; l'étanchéité entre chaque piston et le cylindre annulaire correspondant est assurée de préférence par des joints toriques. La mise en pression d'une chambre annulaire exerce, sur le piston annulaire correspondant, une force axiale opposée à celle des rondelles-ressorts, qui a pour effet le déplacement du piston à l'intérieur du cylindre annulaire et le défreinage de la couronne associée.

Ainsi, dans la boîte de vitesses à deux rapports selon l'invention, l'obtention de l'un ou l'autre des deux rapports de transmission résulte de la libération d'une couronne appartenant à l'un des deux trains épicycloïdaux, tandis que la couronne appartenant à l'autre train épicycloïdal reste bloquée en rotation. Lorsque les couronnes sont toutes deux bloquées en rotation, la boîte de vitesses ne peut pas transmettre de mouvement entre l'arbre d'entrée et l'arbre de sortie. Les moyens de freinage, qui commandent l'immobilisation ou la libération de chaque couronne, sont logés entièrement dans le carter et n'augmentent pas l'encombrement d'ensemble de la boîte de vitesses. Un résultat important de la structure de cette boîte de vitesses est qu'il offre une "sécurité positive" : les deux couronnes à denture intérieure, constituées de plusieurs couronnes élémentaires, sont efficacement freinées l'une et l'autre lorsque la boîte de vitesses ne doit transmettre aucun mouvement ; une commande particulière, par exemple hydraulique, est nécessaire pour défreiner une couronne, et dès que cette commande cesse, volontairement ou accidentellement (par exemple : rupture de l'alimentation ou de la pression hydraulique), le dispositif se remet automatiquement et instantanément en position de blocage complet, grâce aux moyens mécaniques élastiques tels que rondelles-ressorts. Ce type de sécurité est particulièrement intéressant dans les applications aux appareils de levage et de manutention de charges.

Dans un mode de réalisation particulier de cette boîte de vitesses, la carter résulte de l'assemblage étanche d'un flasque latéral d'entrée, de deux parties intermédiaires formant le corps du carter et d'un flasque latéral de sortie, chacune des deux parties intermédiaires logeant la couronne de l'un des deux trains épicycloïdaux, ainsi que les moyens de commande associés.

Dans cette construction de carter en quatre parties distinctes, les flasques latéraux d'entrée et de sortie du carter sont centrés respectivement sur les parties intermédiaires adjacentes, formant le corps du carter, par des épaulements formant une couronne d'appui en regard des disques de friction correspondants. Les deux parties intermédiaires, formant le corps du carter et logeant chacune l'un des deux trains épicycloïdaux, sont aussi centrées l'une par rapport à l'autre par un épaulement.

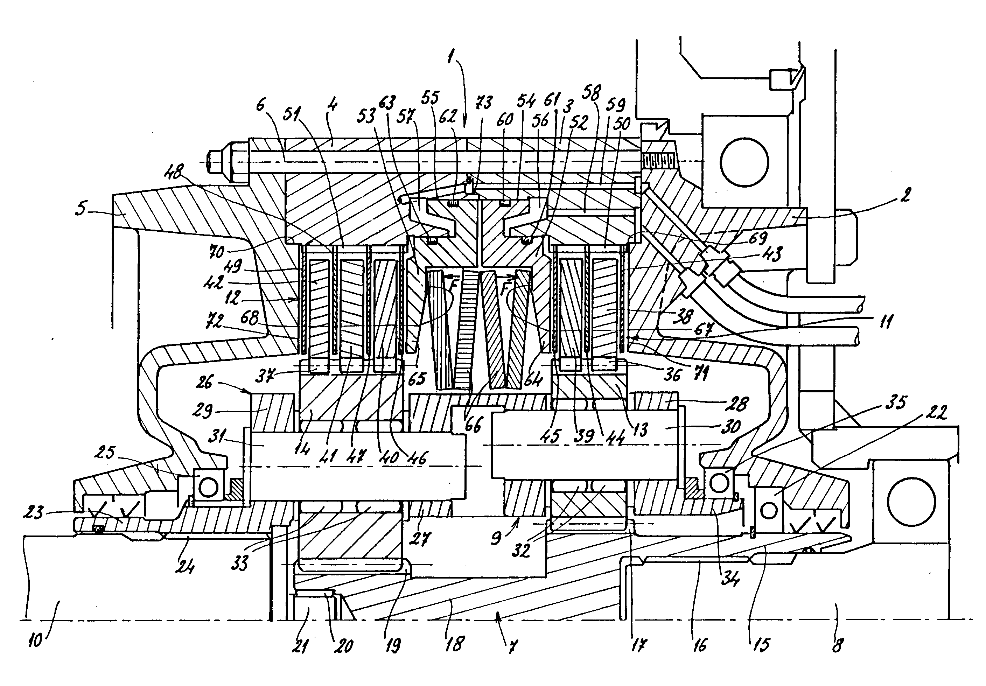

De toute façon, l'invention sera mieux comprise à l'aide de la description qui suit, en référence au dessin schématique annexé représentant, à titre d'exemple non limitatif, une forme de réalisation de cette boîte de vitesses à deux rapports et à changement de vitesse à l'arrêt.

L'unique figure du dessin représente schématiquement, vue en demi-coupe passant par l'axe, une boîte de vitesses destinée notamment à être intercalée entre le moteur électrique et le réducteur d'entraînement (non représentés) du tambour dans un mécanisme de treuil de levage.

La boîte de vitesses comprend un carter désigné dans son ensemble par 1, réalisé en quatre parties distinctes accolées qui sont respectivement : un flasque latéral d'entrée 2 situé du côté du moteur ou de la source de mouvement, deux parties intermédiaires 3,4 de conformation générale annulaire, formant l'une avec l'autre le corps du carter proprement dit, et un flasque latéral de sortie 5 situé du côté du réducteur, ou autre récepteur du mouvement. Les quatre parties 2 à 5 du carter 1 sont assemblées entre elles coaxialement par des goujons 6.

A l'intérieur du carter 1 est disposé un ensemble de deux trains épicycloïdaux, constitué d'un planétaire double 7 solidaire d'un arbre moteur ou d'entrée 8, d'un porte-satellites double 9 solidaire d'un arbre récepteur ou de sortie 10 et de deux couronnes à denture intérieure 11,12 engrenant chacune avec des pignons satellites 13,14 du porte-satellites double 9. La couronne 11 et les pignons satellites 13, dont un seul est représenté, appartiennent à un premier train épicycloïdal situé du côté de l'arbre moteur 8. L'autre couronne 12 et les autres pignons satellites 14, dont un seul est représenté, appartiennent à un second train épicycloïdal situé du côté de l'arbre récepteur 10. Les deux trains épicycloïdaux possèdent des rapports différents.

Le planétaire double 7 coaxial avec l'arbre moteur 8 comprend un arbre creux 15 calé par des cannelures 16 sur l'arbre moteur 8, une première denture de pignon 17 engrenant avec les pignons satellites 13, une partie centrale de raccordement 18 à section circulaire, et une deuxième denture de pignon 19, plus petite que la première denture 17, engrenant avec les autres pignons satellites 14. A son extrémité opposée à l'arbre moteur 8, le planétaire double 7 est monté tournant sur une douille à aiguilles 20 portée par une terminaison centrale 21 de l'arbre du porte-satellites double 9 coaxial avec l'arbre récepteur 10. Le planétaire double 7 est monté tournant dans le carter 1 par l'intermédiaire d'un roulement 22 logé dans le flasque latéral d'entrée 2 du carter 1.

Le porte-satellites double 9 comprend un arbre creux 23 calé par des cannelures 24 sur l'arbre récepteur 10 et centré sur le flasque latéral de sortie 5 du carter 1 par l'intermédiaire d'un roulement 25, un corps de révolution 26 constitué d'une partie centrale 27 et de deux parties latérales 28,29, et deux ensembles d'axes porte-satellites 30,31 disposés chacun entre une des parties latérales 28,29 et la partie centrale 27 du corps de porte-satellites 26. Les pignons satellites 13,14 sont montés libres en rotation respectivement sur les axes porte-satellites 30,31 par l'intermédiaire de douilles à aiguilles 32,33. Le porte-satellites double 9 comprend encore, du côté de l'arbre récepteur 10, une première terminaison centrale 21 d'arbre sur laquelle est monté tournant le planétaire double 7 et, du côté de l'arbre moteur 8, une deuxième terminaison centrale 34 d'arbre creux qui est traversée par l'ensemble constitué de l'arbre moteur 8 et de l'arbre creux 15 du planétaire double 7 et qui est centrée sur le flasque latéral d'entrée 2 du carter 1 par l'intermédiaire d'un roulement 35.

Les pignons satellites 13,14 engrènent respectivement avec la denture intérieure 36,37 des deux couronnes 11,12.

Dans la réalisation montrée sur le dessin, la couronne 11 est constituée de deux couronnes élémentaires coaxiales 38,39, tandis que la couronne 12 est constituée de trois couronnes élémentaires coaxiales 40,41,42. Les couronnes élémentaires 38,39, d'une part, et 40,41,42, d'autre part, sont toutes montées mobiles axialement et sont séparées les unes des autres, et des éléments extérieurs, par des disques de friction coaxiaux, respectivement 43,44,45 et 46,47,48,49, qui sont par exemple des disques frittés. Les disques de friction 43 à 49 sont montés également mobiles axialement à l'intérieur des deux parties intermédiaires 3,4 formant le corps du carter 1. Ces disques de friction comportent des cannelures extérieures, respectivement 50,51 qui coopèrent avec des cannelures conjuguées appartenant auxdites parties intermédiaires 3,4 et qui assurent ainsi une immobilisation en rotation desdits disques.

A l'intérieur du carter 1, entre les deux couronnes 11,12 de l'ensemble des deux trains épicycloïdaux, sont disposés deux pistons annulaires 52,53 montés chacun coulissant dans un cylindre annulaire 54,55 formé à l'intérieur de chacune des parties intermédiaires 3,4 du carter 1. Les pistons annulaires 52,53 forment avec les cylindres annulaires 54,55 correspondants deux chambres de pression annulaires 56,57 indépendantes, communiquant chacune avec une source extérieure de pression de commande hydraulique ou pneumatique, non représentée, par l'intermédiaire de canaux 58,59 ménagés dans le carter 1, l'étanchéité entre chaque piston 52,53 et le cylindre correspondant 54,55 étant assurée par des joints toriques 60,61, d'une part, et 62,63 d'autre part.

Les surfaces latérales extérieures des pistons annulaires 52,53 forment des couronnes d'appui 64,65 situées en regard des disques de friction 45,46 correspondants.

Entre les deux pistons annulaires 52,53 sont disposées des rondelles-ressorts coniques 66 prenant appui sur les surfaces intérieures 67,68 desdits pistons, les rondelles-ressorts 66 étant comprimées entre ces deux surfaces 67,68. Les flasques latéraux d'entrée 2 et de sortie 5 du carter 1 sont centrés respectivement sur les parties intermédiaires 3,4 du corps du carter 1 par des épaulements 69,70 formant des couronnes d'appui 71,72 situées en regard des disques de friction 43,49 correspondants. Les parties centrales 3,4 du corps du carter 1 sont centrées l'une par rapport à l'autre par un épaulement 73.

Enfin, le carter 1 est rempli partiellement d'huile pour assurer la lubrification des éléments à l'intérieur de la boîte de vitesses et son étanchéité est assurée par des joints toriques disposés à la jonction des différents constituants 2 à 5.

Le fonctionnement de cette boîte de vitesses est le suivant :

En position de repos, les rondelles-ressorts 66 exercent un effort axial F constant qui applique les couronnes d'appui 64,65 des surfaces latérales extérieures des pistons annulaires 52,53 sur les disques de friction 45,46 situés en regard ; sous cette action, les disques de friction 43,44,45 d'une part, et 46,47,48,49 d'autre part, se pressent respectivement contre les couronnes élémentaires 38,39 et 40,41,42 qui se bloquent respectivement contre les surfaces d'appui 71,72 des épaulements 69,70 des flasques latéraux d'entrée 2 et de sortie 5 du carter 1. Dans cette position, la boîte ne peut pas transmettre de mouvement car les rapports des deux trains épicycloïdaux sont différents.

Partant de la position de repos, un premier rapport de transmission est obtenu en commandant l'alimentation en fluide sous pression de la chambre annulaire 56 par l'intermédiaire du canal 58. La mise en pression de cette chambre annulaire 56 entraîne le déplacement du piston annulaire 52 à l'intérieur du cylindre annulaire 54 dans le sens d'une compression plus élevée des rondelles-ressorts 66, ce qui a pour effet de défreiner la couronne à denture intérieure 11 et de maintenir freinée la couronne à denture intérieure 12. Dans ce cas, l'arbre moteur 8 entraîne le planétaire double 7, dont la denture de pignon 19 entraîne les pignons satellites 14, et comme la couronne à denture intérieure 12 reste fixe par rapport au carter 1, les pignons satellites 14 entraînent le porte-satellites double 9 et finalement l'arbre récepteur 10. Pendant ce temps, l'autre denture de pignon 17 du planétaire double 7 entraîne librement les pignons satellites 13 et la couronne à denture intérieure 11. Si l'on désigne par wM la vitesse de rotation de l'arbre moteur 8, wR la vitesse de l'arbre récepteur 10, A le nombre de dents de la denture de pignon 19 et C le nombre de dents de la couronne 12, on obtient un premier rapport de transmission :

$$K1 = \frac{wM}{wR} = 1 + \frac{C}{A}$$

Après un retour obligatoire en position de repos, un deuxième rapport de transmission peut être obtenu en commandant l'alimentation en fluide sous pression de la chambre annulaire 57 par l'intermédiaire du canal 59. La mise en pression de cette chambre annulaire 57 entraîne le déplacement du piston annulaire 53 à l'intérieur du cylindre annulaire 55 dans le sens d'une compression plus élevée des rondelles-ressorts 66, ce qui a pour effet de défreiner la couronne à denture intérieure 12 et de maintenir freinée la couronne à denture intérieure 11. Dans ce cas, l'arbre moteur 8 entraîne le planétaire double 7, dont la denture de pignon 17 entraîne les pignons satellites 13 et, comme la couronne à denture intérieure 11 reste fixe par rapport au carter 1, les pignons satellites 13 entraînent le porte-satellites double 9 et finalement l'arbre récepteur 10. Pendant ce temps, l'autre denture de pignon 19 du planétaire double 7 entraîne librement les pignons satellites 14 et la couronne à denture intérieure 12. Si l'on désigne par wM la vitesse de l'arbre moteur 8, w'R la vitesse de l'arbre récepteur 10, B le nombre de dents de la denture de pignon 17 et D le nombre de dents de la couronne 11, on obtient un second rapport de transmission :

$$K2 = \frac{wM}{w'R} = 1 + \frac{D}{B}$$

Le rapport de boîte $\frac{K1}{K2}$ est égal à $\frac{A + C}{B + D} \times \frac{B}{A}$

Dans le cas présent où le nombre de dents des deux couronnes 11,12 est identique, ces deux couronnes ayant le même diamètre intérieur, le rapport de boîte devient égal à :

$$\frac{A + C}{B + C} \times \frac{B}{A}$$

On réalise ainsi une boîte de vitesses à deux rapports dans laquelle le passage des vitesses s'effectue à l'arrêt par défreinage de la couronne du train épicycloïdal ne correspondant pas au rapport de transmission choisi.

En utilisation normale, la couronne correspondant au rapport de transmission choisi reste freinée et assure un freinage statique lors de l'arrêt du moteur accouplé à l'arbre moteur 8.

En cas d'avarie, par exemple dans la commande de l'alimentation en fluide sous pression des chambres annulaires 56,57, le deuxième frein se resserre automatiquement et assure un freinage dynamique dit de sécurité pour ralentir et arrêter la charge suspendue à l'appareil de levage ou de manutention.

Bien entendu, l'invention ne se limite pas à la seule forme de réalisation de cette boîte de vitesses à deux rapports et à changement de vitesse à l'arrêt qui a été décrite ci-dessus, à titre d'exemple ; elle en embrasse, au contraire, toutes les variantes respectant le même principe. En particulier, l'on ne s'éloignerait pas du cadre de l'invention :
- en utilisant deux couronnes 11,12 de diamètres et nombres de dents différents ;
- en réalisant le carter sous une forme autre que l'assemblage de quatre parties ;
- en destinant une boîte de vitesses de même structure à des applications autres que le levage et la manutention.

**Revendications**

1. Boîte de vitesses à deux rapports et à changement de vitesse à l'arrêt, comprenant un ensemble de deux trains épicycloïdaux de rapports différents (K1,K2), constitué d'un planétaire double (7) solidaire de l'arbre d'entrée (8), d'un porte-satellites double (9) solidaire de l'arbre de sortie (10), et de deux couronnes à denture intérieure (11,12) engrenant chacune avec des pignons satellites (13,14) du porte-satellites double (9), cet ensemble (7 à 14) étant disposé à l'intérieur d'un carter (1) en forme de corps creux (3,4) fermé par un flasque latéral (2) traversé par l'arbre d'entrée (8) de la boîte et par un autre flasque latéral (5) traversé par l'arbre de sortie (10) de la boîte, chacune des couronnes (11,12) de l'ensemble des deux trains épicycloïdaux (7 à 14) étant montée libre en rotation dans le corps (3,4) du carter (1) autour de l'axe général de la boîte de vitesses, caractérisée en ce que chacune des deux couronnes (11,12) de l'ensemble des deux trains épicycloïdaux (7 à 14) est constituée de plusieurs couronnes élémentaires coaxiales (38,39 ; 40,41,42) montées mobiles axialement et séparées les unes des autres par des disques de friction coaxiaux (43,44,45 ; 46,47,48,49) à cannelures extérieures (50,51) coopérant avec des cannelures conjuguées du corps (3,4) du carter (1), et en ce que des moyens de commande (52 à 68), portés par le corps (3,4) du carter (1) sont prévus pour freiner et solidariser indépendamment l'une et l'autre couronne (11,12) avec le carter (1), en serrant les couronnes élémentaires (38 à 42) contre les disques de friction adjacents (43 à 49), ou pour libérer en rotation l'une ou l'autre des couronnes (11,12) relativement au carter (1) en desserrant les disques et couronnes élémentaires correspondants, ces moyens de commande comprenant des moyens mécaniques élastiques (66) disposés entre les deux couronnes (11,12) de l'ensemble des deux trains épicycloïdaux (7 à 14) pour maintenir en pression les faces en regard des couronnes élémentaires (38 à 42) et des disques de friction (43 à 49) entre les flasques latéraux (2,5) du carter (1) et les faces opposées desdits moyens mécaniques élastiques (66).

2. Boîte de vitesses à deux rapports selon la revendication 1, caractérisée en ce que les moyens mécaniques élastiques consistent en des rondelles-ressorts (66) disposées et comprimées entre deux pistons annulaires (52,53) mobiles axialement, dont les surfaces latérales extérieures forment chacune une couronne d'appui (64,65) répartissant la force (F) des rondelles-ressorts (66) sur les deux ensembles de couronnes élémentaires (38,39 ; 40,41,42) et de disques de friction (43,44,45 ; 46,47,48,49).

3. Boîte de vitesses à deux rapports selon la revendication 2, caractérisée en ce que les deux pistons annulaires (52,53) sont montés chacun mobile axialement dans un cylindre annulaire (54,55) formé à l'intérieur du corps (3,4) du carter (1), en formant ensemble deux chambres de pression annulaires (56,57) indépendantes, communiquant chacune avec une source de pression de commande hydraulique ou pneumatique par l'intermédiaire de canaux (58,59) ménagés dans le carter (1), l'étanchéité entre chaque piston (52,53) et le cylindre annulaire (54,55) correspondant étant assurée de préférence par des joints toriques (60,61 ; 62,63).

4. Boîte de vitesses à deux rapports selon l'une quelconque des revendications 1 à 3, caractérisée en ce que le carter (1) résulte de l'assemblage étanche d'un flasque latéral d'entrée (2), de deux parties intermédiaires (3,4) formant le corps du carter (1) et d'un flasque latéral de sortie (5), chacune des deux parties intermédiaires (3,4) logeant l'un des deux trains épicycloïdaux, ainsi que les moyens de commande associés.

5. Boîte de vitesses à deux rapports selon la revendication 4, caractérisée en ce que les flasques latéraux d'entrée (2) et de sortie (5) du carter (1) sont centrés respectivement sur les parties intermédiaires (3,4) adjacentes, formant le corps du carter, par des épaulements (69,70) formant une couronne d'appui (71,72) en regard des disques de friction (43,49) correspondants.

6. Boîte de vitesses à deux rapports selon la revendication 4 ou 5, caractérisée en ce que les deux parties intermédiaires (3,4), formant le corps du carter (1) et logeant chacune l'un des deux trains épicycloïdaux, sont centrées l'une par rapport à l'autre par un épaulement (73).

## Claims

1. Two-speed gearbox with gear change at rest, comprising a set of two epicyclic trains with different ratios (K1, K2), consisting of a double sun wheel (7) integral with the input shaft (8), a double planet carrier (9) integral with the output shaft (10), and two internal-toothed annular gears (11, 12) each meshing with planet gears (13, 14) on the double planet carrier (9), this assembly (7 to 14) being arranged inside a casing (1) in the form of a hollow body (3, 4) closed by a lateral plate (2) with the input shaft (8) of the box passing through it and by another lateral plate (5) with the output shaft (10) of the box passing through it, each of the annular gears (11, 12) of the set of two epicyclic trains (7 to 14) being mounted so as to rotate freely in the body (3, 4) of the casing (1) about the general axis of the gearbox, characterised in that each of the two annular gears (11, 12) in the set of two epicyclic trains (7 to 14) consists of several coaxial constituent annular gears (38, 39; 40, 41, 42) mounted so as to be axially mobile and separated from each other by coaxial friction discs (43, 44, 45; 46, 47, 48, 49) with external flutes (50, 51) interacting with conjugate flutes in the body (3, 4) of the casing (1), and in that control means (52 to 68), carried by the body (3, 4) of the casing (1) are provided for braking and independently fixing each annular gear (11, 12) to the casing (1), by pressing the constituent annular gears (38 to 42) against the adjacent friction discs (43 to 49), or for freeing in rotation one or other of the annular gears (11, 12) relative to the casing (1) by releasing the discs and corresponding constituent annular gears from each other, these control means comprising elastic mechanical means (66) arranged between the two annular gears (11, 12) in the set of two epicyclic trains (7 to 14) so as to maintain under pressure the opposite faces of the constituent annular gears (38 to 42) and of the friction discs (43 to 49) between the lateral plates (2, 5) of the casing (1) and the opposite faces of the said elastic mechanical means (66).

2. Two-speed gearbox according to claim 1, characterised in that the elastic mechanical means consist of spring washers (66) arranged and compressed between two axially mobile annular pistons (52, 53), whose external lateral surfaces each form a bearing annular gear (64, 65) distributing the force (F) of the spring washers (66) over the two sets of constituent annular gears (38, 39; 40, 41, 42) and friction discs (43, 44, 45; 46, 47, 48, 49).

3. Two-speed gearbox according to claim 2, characterised in that the two annular pistons (52, 53) are each mounted so as to be axially mobile in an annular cylinder (54, 55) formed inside the body (3, 4) of the casing (1), forming together two independent annular pressure chambers (56, 57), each communicating with a source of hydraulic or pneumatic control pressure through pipes (58, 59) provided in the casing (1), the sealing between each piston (52, 53) and the corresponding annular cylinder (54, 55) being provided preferably by O-ring seals (60, 61; 62, 63).

4. Two-speed gearbox according to any one of claims 1 to 3, characterised in that the casing (1) results from the fluid-tight assembly of a lateral input plate (2), two intermediate parts (3, 4) forming the body of the casing (1) and a lateral output plate (5), each of the two intermediate parts (3, 4) housing one of the two epicyclic trains, as well as the associated control means.

5. Two-speed gearbox according to claim 4, characterised in that the lateral input (2) and output (5) plates of the casing (1) are centred respectively on the adjacent intermediate parts (3, 4), forming the body of the casing, by shoulders (69, 70) forming a bearing ring (71, 72) facing the corresponding friction discs (43, 49).

6. Two-speed gearbox according to claim 4 or 5, characterised in that the two intermediate parts (3, 4), forming the body of the casing (1) and each housing one of the two epicyclic trains, are centred with respect to each other by means of a shoulder (73).

**Patentansprüche**

1. Zweistufiges Getriebe mit Gangwechsel im Stillstand, umfassend eine Konstruktion aus zwei Umlaufgetriebezügen mit unterschiedlichem Verhältnis ($K1$, $K2$), die von einem doppelten, mit der Antriebwelle (8) verbundenen Zentralrad (7), einem mit der Abtriebwelle (10) verbundenen, doppelten Satellitenträger (9) und zwei Innenzahnkränzen (11, 12) gebildet ist, von denen jeder mit Planetenrädern (13, 14) des doppelten Satellitenträgers (9) kämmt, wobei diese Konstruktion (7 bis 14) im Inneren eines Gehäuses (1) in der Form eines hohlen Körpers (3, 4) angeordnet ist, das mit einem von der Antriebwelle (8) des Getriebes durchquerten Seitenflansch (2) und mit einem anderen von der Abtriebwelle (10) des Getriebes durchquerten Seitenflansch (5) geschlossen ist, und wobei in dem Körper (3, 4) des Gehäuses (1) jeder der Zahnkränze (11, 12) der Konstruktion (7 bis 14) aus zwei Umlaufgetriebezügen drehbeweglich um die Hauptachse des Getriebes angebracht ist, dadurch gekennzeichnet, daß jeder der beiden Zahnkränze (11, 12) der Konstruktion (7 bis 14) aus zwei Umlaufgetriebezügen von mehreren koaxialen Elementarzahnkränzen (38, 39; 40, 41, 42) gebildet ist, die axial beweglich und voneinander durch koaxiale Reibscheiben (43, 44, 45; 46, 47, 48, 49) mit Außenrillen (50, 51) getrennt sind, die mit zugeordneten Rillen des Körpers (3, 4) des Gehäuses (1) zusammenarbeiten, und daß von dem Körper (3, 4) des Gehäuses (1) getragene Steuerungsmittel (52 bis 68) vorgesehen sind, um unabhängig beide Zahnkränze (11,12) abzubremsen und mit dem Gehäuse (1) zu verbinden, indem die Elementarzahnkränze (38 bis 42) gegen die benachbarten Reibscheiben (43 bis 49) gedrückt werden, oder um beide Zahnkänze (11, 12) zur Drehung relativ zu dem Gehäuse (1) freizugeben, indem die entsprechenden Scheiben und Elementarzahnkränze gelöst werden, und wobei diese Steuerungsmittel mechanische, elastische Mittel (66) umfassen, die zwischen den beiden Zahnkränzen (11, 12) der Konstruktion (7 bis 14) mit zwei Umlaufgetriebezügen angeordnet sind, um die gegenüberliegenden Seiten der Elementarzahnkränze (38 bis 42) und der Reibscheiben (43 bis 49) zwischen den Seitenflanschen (2, 5) des Gehäuses (1) und den gegenüberliegenden Seiten der genannten mechanischen, elastischen Mittel (66) unter Druck zu halten.

2. Zweistufiges Getriebe nach Anspruch 1, dadurch gekenn zeichnet, daß die mechanischen, elastischen Mittel aus Ringfedern (66) bestehen, die zwischen zwei axial beweglichen Ringkolben (52, 53) angeordnet und zusammenge drückt sind, deren seitliche Außenflächen jeweils einen Abstützring (64, 65) bilden, der die Kraft (F) der Ringfedern (66) auf die beiden Gesamtheiten von Elementarzahnkränzen (38, 39; 40, 41, 42) und Reibscheiben (43, 44, 45; 46, 47, 48, 49) verteilt.

3. Zweistufiges Getriebe nach Anspruch 2, dadurch gekenn zeichnet, daß die beiden Ringkolben (52, 53) jeweils axial beweglich in einem im Inneren des Körpers (3, 4) des Gehäuses (1) ausgebildeten Ringzylinder (54, 55) mon tiert sind, wobei sie zusammen zwei unabhängige, ringförmige Druckkammern (56, 57) bilden, von denen jede mit einer hydraulischen oder pneumatischen Steuerungsdruckquelle über in dem Gehäuse (1) ausgebildete Kanäle (58, 59) in Verbindung steht, wobei die Dichtung zwischen jedem Kolben (52, 53) und dem entsprechenden Ringzylinder (54, 55) vorzugsweise durch Runddichtringe (60, 61; 62, 63) sichergestellt ist.

4. Zweistufiges Getriebe nach irgendeinem der Ansprüche 1 bis 3, dadurch gekennzeichnet, daß das Gehäuse (1) das Ergebnis eines dichten Zusammenbaus aus einem antriebseitigen Seitenflansch (2), zwei den Körper des Gehäuses (1) bildenden Zwischenteilen (3, 4) und aus einem abtriebseitigen Seitenflansch (5) ist, wobei jeder der beiden Zwischenteile (3, 4) einen der beiden Umlaufgetriebezüge so wie die zugeordneten Steuerungsmittel aufnimmt.

5. Zweistufiges Getriebe nach Anspruch 4, dadurch gekenn zeichnet, daß der antriebseitige und der abtriebseitige Seitenflansch (4, 5) des Gehäuses (1) an dem jeweils benachbarten Zwischenteil (3, 4), die den Körper des Gehäuses bilden, durch Schultern (69, 70) zentriert sind, die für die gegenüberliegenden entsprechenden Reibscheiben (43, 49) einen Abstützring (71, 72) bilden.

6. Zweistufiges Getriebe nach Anspruch 4 oder 5, dadurch gekennzeichnet, daß die beiden Zwischenteile (3, 4), die den Körper des Gehäuses (1) bilden und jeweils einen der beiden Umlaufgetriebezüge aufnehmen, in Bezug zueinander durch einen Bund (73) zentriert sind.